Europäisches Patentamt

European Patent Office

Office européen des brevets

(11) Numéro de publication: **0 134 184**
A2

# (12) DEMANDE DE BREVET EUROPEEN

(21) Numéro de dépôt: **84440033.3**

(22) Date de dépôt: **31.07.84**

(51) Int. Cl.⁴: **F 24 D 11/02**

(30) Priorité: **05.08.83 FR 8313190**

(43) Date de publication de la demande: **13.03.85**
**Bulletin 85/11**

(84) Etats contractants désignés: **AT BE CH DE GB IT LI LU NL SE**

(71) Demandeur: **S.A. H.D.G., 232, rue de la Carnoy, F-59130 - Lambersart (Nord) (FR)**

(72) Inventeur: **Fondeur, François, 78, rue du Chevalier Français, F-59800 - Lille (Nord) (FR)**

(74) Mandataire: **Lepage, Jean-Pierre, Cabinet Lepage & Aubertin Innovations et Prestations 23/25, rue Nicolas Leblanc, F-59011 Lille Cédex 1 (Nord) (FR)**

(54) **Installation de chauffage équipée d'une pompe à chaleur.**

(57) L'invention est relative à une installation de chauffage équipée d'une pompe à chaleur. Elle trouvera plus particulièrement son application pour la revalorisation de l'énergie fournie par des dispositifs de faible apport thermique.

Selon l'invention, l'installation comporte un réservoir (1) de stockage du fluide caloporteur et une pompe à chaleur (4), dont les échangeurs source froide (5) et source chaude (6) sont placés dans le réservoir, tel que l'échangeur source froide (5) soit placé au-dessous de l'échangeur source chaude (6).

En outre, l'échangeur (5) tire ses calories d'un échangeur (7) appartenant à un circuit solaire, et placé au même niveau ou en dessous de l'échangeur (5).

0134184

- 1 -

L'invention est relative à une installation de chauffage
équipée d'une pompe à chaleur. Elle trouvera plus particulièrement son
application pour la valorisation de l'énergie fournie par des dispositifs de faible apport thermique.

Actuellement, il est connu d'équiper des installations de
chauffage avec des pompes à chaleur qui puisent des calories dans une
source froide pour les fournir au fluide caloporteur de l'installation
de chauffage. D'une manière classique, les échangeurs source froide
et source chaude de la pompe à chaleur sont plongés dans deux milieux
de températures différentes, la source froide étant généralement constituée par l'air ambiant extérieur ou par une réserve d'eau, par exemple,
une rivière.

Il est connu, en outre, d'équiper les installations de chauffage avec des capteurs solaires, dans lesquels s'écoule un fluide caloporteur dont la température en période hivernal peut être de l'ordre de
15 à 20 °C. Cette énergie solaire n'est pas directement utilisable dans
une installation de chauffage puisque le fluide caloporteur est habituellement à une température supérieure à 50 °C.

Le but principal de l'invention est de proposer une installation de chauffage équipée d'une pompe à chaleur qui assure la revalorisation des calories fournies par des dispositifs à faible apport
thermique,notamment les capteurs solaires. La pompe à chaleur joue le
rôle d'un ascenseur thermique qui amène les calories fournies par le
capteur solaire à un niveau où elles sont directement utilisables dans
l'installation de chauffage.

A cet effet, l'invention propose d'équiper l'installation
de chauffage avec un réservoir de stockage du fluide caloporteur dans
lequel sont logés à la fois les échangeurs source chaude et source
froide de la pompe à chaleur et l'échangeur dont est équipé le circuit
solaire. Ce dernier échangeur pourra également appartenir à un circuit
de climatisation ou de réfrigération. Son rôle est de fournir de
l'énergie directement à l'échangeur de la source froide qui la transmettra à l'échangeur de la source chaude au moyen de la pompe à chaleur.

D'autres buts et avantages de la présente invention, apparaitront au cours de la description qui va suivre, qui n'est donnée qu'à
titre indicatif et qui n'a pas pour but de la limiter.

L'installation de chauffage de fluide caloporteur, compre-

- 2 -

nant notamment un réserver de stockage du fluide caloporteur et une pompe à chaleur dont l'échangeur source chaude est placé dans le réservoir en contact d'échange thermique avec le fluide caloporteur, est caractérisée par le fait que l'échangeur source froide de la pompe à chaleur est placé dans le réservoir au-dessous de l'échangeur source chaude et en contact d'échange thermique avec le fluide caloporteur.

L'invention sera mieux comprise si l'on se réfère à la description ci-dessous ainsi qu'aux dessins en annexe qui en font partie intégrante.

La figure 1 schématise une installation de chauffage selon l'invention.

Les figures 2 et 3 schématisent deux modes de réalisation du réservoir de l'installation de chauffage selon la figure 1.

L'invention s'applique à toute installation de chauffage d'un fluide caloporteur, que ce fluide caloporteur parcourt un circuit de chauffage d'une habitation ou d'un local, ou qu'il soit destiné à alimenter un circuit de distribution de fluide, notamment d'eau chaude.

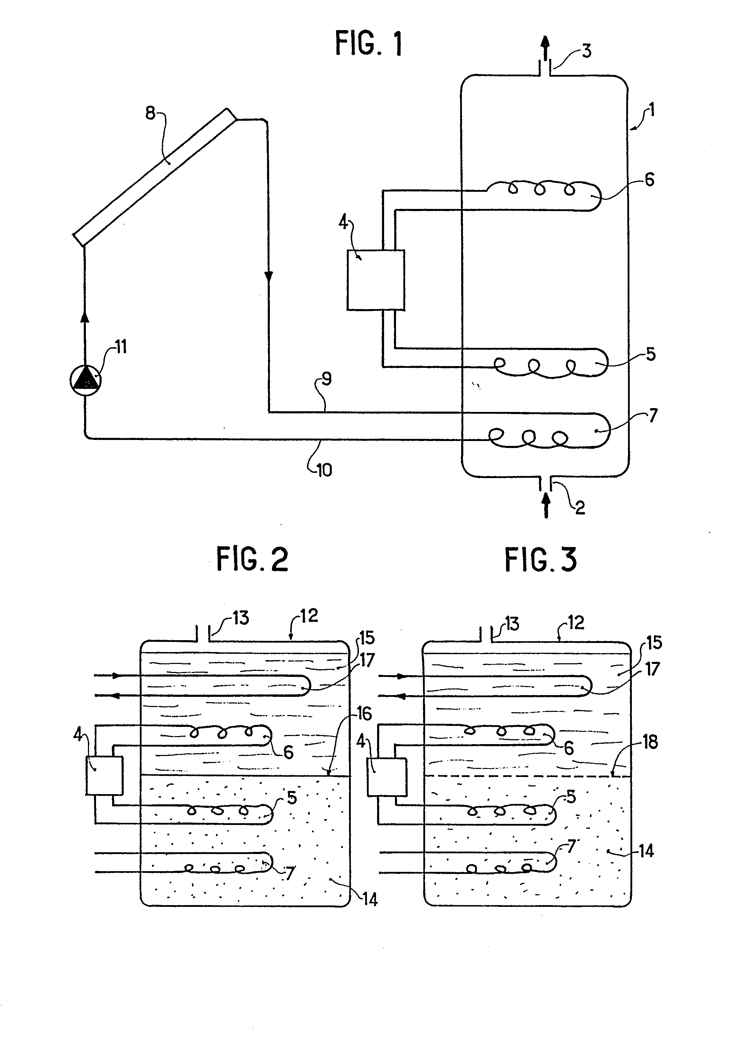

Une telle installation est illustrée à la figure 1, et elle comprend notamment un réservoir 1 qui assure le stockage et le chauffage du fluide calopoteur. Ce réservoir se présente sous la forme d'une enceinte équipée d'un orifice d'admission 2 et d'un orifice de sortie 3, qui assure le raccordement du réservoir sur un circuit extérieur ouvert, non illustré à la figure 1, ou d'un échangeur 17 à la figure 2 qui assure le raccordement sur un circuit extérieur fermé, par exemple un circuit fermé de chauffage.

Le fluide caloporteur pourra être de l'eau ou tout autre fluide habituellement employé pour cet usage.

Le réservoir sera de toute forme connue de l'Homme de l'Art et il se présentera, de préférence, sous la forme d'une enceinte allongée, disposée verticalement, dont le fond sera muni de l'orifice d'admission 2, et la paroi supérieure de l'orifice de sortie 3, ce qui permet l'écoulement du fluide à l'intérieur du réservoir depuis sa partie inférieure vers sa partie supérieure.

L'invention comporte, en outre, une pompe à chaleur 4, de tout type connu, reliée d'une part à un échangeur source froide 5, et d'autre part à un échangeur source chaude 6 au moyen desquels s'effectuent les transferts de chaleur entre les sources froide et chaude.

L'une des caractéristiques de l'invention consiste à placer dans le réservoir, en contact d'échange thermique avec le fluide caloporteur, les deux échangeurs de la pompe à chaleur, tel que l'échangeur source froide soit placé au-dessous de l'échangeur source chaude.

Etant donné que l'échangeur 5 puise ses calories dans la source froide constituée par le liquide au voisinage de cet échangeur, et l'échangeur 6 fournit des calories à la source chaude constituée par le liquide voisinage de cet échangeur, il s'établit dans le réservoir une stratification au sein du liquide dont la température est croissante depuis le bas vers le haut.

Selon une autre caractéristique de l'invention, l'installation de chauffage d'un fluide est caractérisée par le fait qu'elle intègre une unité de stockage de fluide caloporteur constituée de un ou plusieurs compartiments, permettant le chauffage direct de la source chaude lorsque la source froide est à une température suffisante et le refroidissement de la source froide au profit du réchauffement de la source chaude par l'intermédiaire d'une pompe à chaleur lorsque la source froide n'est pas à une température suffisante.

Les calories d'origine solaire ont pour effet de réchauffer le fluide caloporteur au voisinage des échangeurs 7 et 5, constituant ainsi une source permanente d'énergie absorbée par l'échangeur source froide 5. De plus, cet apport d'énergie empêche un abaissement important de la température du fluide au voisinage de la source froide 5, qui pourrait se traduire par un givrage du fluide provoquant l'arrêt de la pompe à chaleur.

Selon une autre caractéristique de l'invention, la pompe à chaleur 4 est mise en marche uniquement lorsque la quantité de chaleur fournit par l'échangeur 7 relié aux éléments de capteur solaire est insuffisante pour réchauffer seule et directement le fluide caloporteur. Cela évite de fournir de l'énergie extérieure à la pompe à chaleur lorsque la température du fluide traversant le capteur solaire est suffisamment élevée pour réchauffer d'une manière efficace le fluide à l'intérieur de l'installation de chauffage.

Les calories puisées par la source froide 5 pourront avoir une origine non solaire, et par exemple, l'échangeur 7 pourra appartenir à un circuit de climatisation ou de réfrigération. Dans de tels circuits, les échangeurs sont à des températures relativement basses, ce qui ne permet pas de les utiliser directement pour réchauffer un

0134184

- 4 -

fluide. Le réservoir selon l'invention permet de récupérer ces calories et de les amener à un niveau où elles sont directement utilisables dans l'installation.

L'invention s'applique également dans le cas de réservoirs pour lesquels il existe deux zones thermiques distinctes. Cela est notamment illustré aux figures 2 et 3.

Dans le cas de la figure 2, le réservoir 12 est muni d'une ouverture supérieure 13 et il renferme deux fluides non miscibles de densités différentes, le fluide 14 dans la partie inférieure et le fluide 15 dans la partie supérieure. Ces deux fluides définissent un plan de séparation 16 au niveau duquel peut s'établir des échanges thermiques entre les fluides caloporteurs 14 et 15. Ces fluides seront de tout type habituellement utilisé pour ce genre de réalisation.

Le fluide 14 constitue la source froide dans lequel plonge l'échangeur source froide 5, ainsi que l'échangeur 7 relié au capteur solaire ou à un circuit de climatisation ou de réfrigération. Ainsi, il s'établit des échanges thermiques entre les échangeurs 5 et 7. Par ailleurs, l'échangeur source chaude 6 est plongé dans le liquide supérieur 15 ainsi qu'un échangeur supplémentaire 17 dans lequel circule le fluide caloporteur qui se réchauffe en s'écoulant en contact d'échange thermique avec la source chaude constituée par le liquide 15.

Cela permet d'obtenir un réservoir dans lequel les sources chaude et froide sont physiquement séparées.

Dans le mode de réalisation illustré à la figure 3, les sources chaude et froide de la pompe à chaleur sont également physiquement séparées, mais cette fois-ci à l'aide d'une membrane 18, étanche ou perforée mais qui présente de bonnes qualités de conduction thermique. Dans ce dernier cas, on pourra utiliser le même fluide pour constituer les sources chaude et froide de la pompe à chaleur.

Le mode de réalisation qui vient d'être décrit n'est donné qu'à titre indicatif, et d'autres mises en oeuvre de la présente invention, à la portée de l'Homme de l'Art, pourraient être adoptées sans pour autant sortir du cadre de celle-ci. On pourra notamment utiliser 1 ou plusieurs réservoirs séparés contenant des fluides susceptibles ou non de changer de phase de façon à augmenter les capacités de stockage, le transfert de calories des réservoirs froids aux réservoirs chauds se faisant avec ou sans déclenchement de la pompe à chaleur en fonction des niveaux de température atteints.

REVENDICATIONS

1. Installation de chauffage d'un fluide caloporteur, caractérisée par le fait qu'elle intègre une unité de stockage (1) de fluide caloporteur constituée de un ou plusieurs compartiments, permettant le chauffage direct de la source chaude (6) lorsque la source froide (5) est à une température suffisante et le refroidissement de la source froide (5) au profit du réchauffement de la source chaude (6) par l'intermédiaire d'une pompe à chaleur (4) lorsque la source froide (5) n'est pas à une température suffisante.

2. Installation de chauffage selon la revendication 1, comprenant notamment un réservoir (1) de stockage du fluide caloporteur, et une pompe à chaleur (4) dont l'échangeur source chaude (6) est placé dans le réservoir (1) en contact d'échange thermique avec le fluide caloporteur, caractérisée par le fait que l'échangeur source froide (5) de la pompe à chaleur (4) est placé dans le réservoir (1) au-dessous de l'échangeur source chaude (6) et en contact d'échange thermique avec le fluide caloporteur.

3. Installation de chauffage selon la revendication 2, caractérisée par le fait que l'échangeur source froide (5) tire ses calories d'un échangeur de chaleur (7), relié à des éléments de capteur solaire (8) placé dans le réservoir (1) au même niveau que l'échangeur source froide (5) et en contact d'échange thermique avec le fluide caloporteur.

4. Installation de chauffage selon la revendication 2, caractérisée par le fait que l'échangeur source froide (5) tire ses calories d'un échangeur de chaleur (7), relié à des éléments de capteur solaire placé dans le réservoir au-dessous de l'échangeur source froide (5).

5. Installation de chauffage selon la revendication 3 ou 4, caractérisée par le fait que la pompe à chaleur (4) est mise en marche uniquement lorsque la quantité de chaleur fournie par l'échangeur (7) relié aux éléments de capteur solaire (8) est insuffisante pour réchauffer seule directement le fluide caloporteur.

6. Installation de chauffage selon la revendication 2, caractérisée par le fait que la quantité de chaleur absorbée par l'échangeur source froide (5) est fournie par l'échangeur de chaleur d'un circuit de climatisation ou de réfrigération, placé dans le réservoir sous l'échangeur source froide (5) et en contact d'échange thermique avec le fluide caloporteur.

7. Installation de chauffage selon la revendication 2, caractérisée par le fait que le réservoir (12) contient deux fluides (14, 15) caloporteurs non miscibles, de densités différentes qui définissent deux zones physiquement séparées, tels que les échangeurs source chaude (6) et source froide (5) soient respectivement plongés dans les zones supérieure et inférieure.

8. Installation de chauffage selon l'une quelconque des revendications 1 à 7, caractérisée par le fait que le réservoir (1) présente un orifice d'admission (2) et un orifice de sortie (3) raccordant le réservoir (1) sur un circuit extérieur ouvert.

0134184

FIG. 1

FIG. 2

FIG. 3